# EUROPÄISCHE PATENTSCHRIFT

(11) **EP 2 923 333 B1**
(45) Veröffentlichungstag und Bekanntmachung des Hinweises auf die Patenterteilung: **19.07.2017**
(21) Anmeldenummer: 12799096.8
(22) Anmeldetag: 20.11.2012
(51) Int. Cl.: G06T 7/00, G06T 17/05, G06T 7/11, G06T 7/194, G06K 9/00

(54) **VERFAHREN ZUM AUTOMATISCHEN ERSTELLEN VON ZWEI- ODER DREIDIMENSIONALEN GEBÄUDEMODELLEN**
METHOD FOR THE AUTOMATIC CREATION OF TWO- OR THREE-DIMENSIONAL BUILDING MODELS
PROCÉDÉ POUR LA RÉALISATION AUTOMATIQUE DE MODÈLES DE BÂTIMENT À DEUX OU TROIS DIMENSIONS

(43) Veröffentlichungstag der Anmeldung: 30.09.2015
(73) Patentinhaber: Siemens Aktiengesellschaft, 80333 München (DE)
(72) Erfinder: BIRCHBAUER, Josef, Alois, 8054 Seiersberg (AT); KLUCKNER, Stefan, 6063 Rum (AT); WINDISCH, Claudia, 8565 St. Johann (AT)
(74) Vertreter: Maier, Daniel Oliver
(86) Internationale Anmeldenummer: PCT/EP2012/073089
(87) Internationale Veröffentlichungsnummer: WO 2014/079477

(56) Entgegenhaltungen:
- US-A1- 2007 014 488
- MEIXNER P ET AL: "Framework to automatically characterize real property using high resolution aerial images", AMERICAN SOCIETY FOR PHOTOGRAMMETRY AND REMOTE SENSING ANNUAL CONFERENCE 2010: OPPORTUNITIES FOR EMERGING GEOSPATIAL TECHNOLOGIES; 20100426 TO 20100430; SAN DIEGO, CA, USA, AMERICAN SOCIETY FOR PHOTOGRAMMETRY AND REMOTE SENSING, US; SAN DIEGO, CA, US, Bd. 2, 1. Januar 2010 (2010-01-01), Seiten 632-639, XP008164243, ISBN: 978-1-61738-916-0
- KNOBLOCK C A ET AL: "A general approach to discovering, registering, and extracting features from raster maps", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 7534, 2010, XP002711545, ISSN: 0277-786X
- MARTIN HABBECKE ET AL: "Automatic Registration of Oblique Aerial Images with Cadastral Maps", 10. September 2010 (2010-09-10), TRENDS AND TOPICS IN COMPUTER VISION, SPRINGER BERLIN HEIDELBERG, BERLIN, HEIDELBERG, PAGE(S) 253 - 266, XP047006571, ISBN: 978-3-642-35739-8 das ganze Dokument
- MNIH V ET AL: "Learning to label aerial images from noisy data", 29TH INTERNATIONAL CONFERENCE ON MACHINE LEARNING, ICML 2012; 20120626 TO 20120701; EDINBURGH, UK, OMNIPRESS, USA, Bd. 1, 26. Juni 2012 (2012-06-26), - 1. Juli 2012 (2012-07-01), Seiten 567-574, XP008164244, ISBN: 978-1-4503-1285-1
- LEBERL F ET AL: "Aerial Computer Vision For A 3D Virtual Habitat", COMPUTER IEEE USA, Bd. 43, Nr. 6, Juni 2010 (2010-06), Seiten 24-31, XP002711546, ISSN: 0018-9162
- STEFAN KLUCKNER ET AL: "Semantic Classification in Aerial Imagery by Integrating Appearance and Height Information", 23. September 2009 (2009-09-23), COMPUTER VISION Â ACCV 2009, SPRINGER BERLIN HEIDELBERG, BERLIN, HEIDELBERG, PAGE(S) 477 - 488, XP019141300, ISBN: 978-3-642-12303-0 das ganze Dokument

## Beschreibung

### Technisches Gebiet

Die Erfindung betrifft ein Verfahren zum automatischen Erstellen von zwei- oder dreidimensionalen Gebäudemodellen aus zumindest einer digitalen Luftaufnahme und zum automatischen Versehen mit semantischer Gebäudeinformation.

Dieses Verfahren umfasst das automatische Segmentieren - in zwei oder drei Dimensionen - von Gebäuden auf eine bestimmte Genauigkeit, insbesondere die Pixel-genaue Segmentierung (jedes Pixel wird einem Gebäudesegment zugeordnet), in digitalen Luftaufnahmen. Digitale Luftaufnahmen können mit hochauflösenden Luftbildkameras gemacht werden, was den Vorteil einer gleichbleibenden geometrischen Genauigkeit der angefertigten Bilder hat, die z.B. auf 5 bis 20 cm genau sein können. Die digitalen Luftaufnahmen können auch mit kostengünstigeren Mitteln, etwa mit sogenannten Drohnen (engl. Micro-Aerial-Vehicles MAV oder Unmanned-Aerial-Vehicles UAV), die mit einfachen Verbraucherkameras ausgestattet sind, aufgenommen werden.

Grundprinzip der Segmentierung ist die Aufteilung des Bildes in Regionen maximaler Homogenität. Die Homogenitätskriterien können sich auf verschiedene Parameter beziehen: Grauwert, Farbe, Textur, Form oder Ähnliches. Angestrebt wird Homogenität im Inneren des Segments, also der Pixel untereinander. Die Segmentierung der Gebäude stellt eine komplexe Aufgabe dar, weil erstens die Gebäudeformen einer großen Variation unterliegen: sie können einen einfachen, etwa rechteckigen Grundriss aufweisen, sie können aber auch aus einer Ansammlung nicht vorhersehbarer Formen bestehen, etwa im Bereich der modernen Architektur. Zweitens ist auch eine automatische Erkennung bzw. Segmentierung aufgrund des Erscheinungsbildes des Gebäudes (Farbe, Textur) oft nicht verlässlich, weil die verwendeten Materialien zu vielfältig (vor allem auch regional bedingt) und damit nicht ausreichend modellierbar sind.

Die bei der Segmentierung generierten zwei- oder dreidimensionalen Rohdaten müssen nun aber noch in eine semantisch bedeutungsvolle Repräsentation übergeführt und verdichtet werden, um Schnittstellen zu gängigen Anwendungen wie Google Maps, CAD oder Building Information Models (BIMs) zu erfüllen. Denn die Segmente sind noch keine semantisch belegten Bildobjekte, sondern vorerst nur Gruppen von Pixeln, die bestimmte Homogenitätskriterien erfüllen. Erst durch eine Klassifikation wird der Bezug zum realen Objekt hergestellt. Das Überführen in eine semantisch bedeutungsvolle Repräsentation bedeutet, dass die einzelnen Segmente einer Klasse zugeordnet werden, etwa "Gebäude" oder "Grund" und dann weiteren Unterklassen zugeordnet werden, etwa "Dach" im ersten Fall oder "Grünfläche" im zweiten Fall.

Der "Begriff Building Information Models/Modeling" (kurz: BIM, dt. Gebäudedatenmodellierung) beschreibt eine Methode der optimierten Planung, Ausführung und Bewirtschaftung von Gebäuden mit Hilfe von Software. Dabei werden alle relevanten Gebäudedaten digital erfasst, kombiniert und vernetzt. Das Gebäude ist als virtuelles Gebäudemodell auch geometrisch visualisiert (Computermodell). Building Information Modeling findet Anwendung sowohl im Bauwesen zur Bauplanung und Bauausführung (Architektur, Ingenieurwesen, Haustechnik,) als auch im Facilitymanagement.

Gängige Klassifikationsverfahren liefern eine Segmentierungsmaske zumeist in der Bilddomäne. Gebäuderegionen werden auf der Ebene von Bildpunkten zusammengefasst und repräsentiert. Wegen der Reduktion der Datenmenge, der Weiterverarbeitung und der Visualisierung ist eine geometrische Abstraktion notwendig. Diese Abstraktion umfasst eine Ableitung von Gebäudekanten, aber auch volumetrische dreidimensionale Beschreibungen der Gebäude.

Grundsätzlich könnte das erfindungsgemäße Verfahren auf eine einzige Luftaufnahme angewendet werden, wenn nur ein zweidimensionales Gebäudemodell erwünscht ist. Wenn die Luftaufnahme bereits zusätzlich Tiefeninformation enthält, ist diese auch für ein erfindungsgemäßes dreidimensionales Gebäudemodell ausreichend. Enthält die Luftaufnahme keine Tiefeninformation, so sind mehrere Luftaufnahmen zum Erstellen eines dreidimensionalen Gebäudemodells nötig.

### Stand der Technik

Bisher wurden zusätzliche unterscheidende Informationen, wie Tiefeninformation, zu den radiometrischen Bilddaten (elektromagnetische Strahlung inklusive sichtbares Licht) verwendet, was zwar die Segmentierung der Klasse von erhabenen Objekten erleichtert, jedoch ist oft eine Abgrenzung innerhalb dieser Klasse, z.B. zwischen Vegetation, kleineren Erhebungen und Gebäuden nicht trivial. Obwohl geeignete Merkmalsräume bekannt sind und vor allem gelernte Klassifikationsansätze Genauigkeiten von etwa 90-98% richtig klassifizierter Gebäudefläche erreichen, stellt das meist händische oder halbautomatische Annotieren von repräsentativen Trainingsbeispielen ein komplexes und meist zeitaufwändiges Problem dar. Unter "Annotieren" versteht man das - in der Regel manuelle - Versehen von Daten mit einem "Label", also mit einer Beschreibung zu diesen Daten, welche weitere Eigenschaften der Daten enthält. So könnte etwa einem bestimmten Bildsegment das Label "Person" oder "Gebäude" oder "Dach" zugeordnet werden, darüber hinaus könnte dem "Dach" auch noch eine Dachform, wie ein Giebeldach, und/oder eine Dachhöhe zugeordnet werden.

Das Problem der Gebäudeklassifikation (binäre Klassifikation, oder Zwei-Klassenproblem) ist gut studiert und dennoch nicht vollständig gelöst. Bei der Binärklassifikation beschreiben mehrere Attribute die Größe und Form jedes Segments: z.B. Fläche, Asymmetrie, Rechteckigkeit, Verhältnis von Länge zu Breite und Kompaktheit. Diese Attribute werden zusammen mit der spektralen Information und der Höhe in einen Merkmalsvektor transformiert, der dann dem entsprechenden Klassenlabel, extrahiert von Trainingsbeispielen zugeordnet wird. Trainingsbeispiele sind solche Segmente, die bereits vorab bekannt sind und deren Attribute klar definiert sind.

Die spektralen oder radiometrischen Bilddaten werden dabei zum Beispiel mittels Photogrammetrie generiert. Die Photogrammetrie umfasst eine Gruppe von Messmethoden und Auswerteverfahren der Fernerkundung, um aus Fotografien und genauen Messbildern eines Objektes seine räumliche Lage oder dreidimensionale Form zu bestimmen. Im Regelfall werden die Bilder mit speziellen Messkameras aufgenommen. Die Photogrammetrie verwendet u.a. auch Laserscanner (LiDAR-Methode) und/oder Farbdaten, um Gebäudekanten bzw. Gebäudekörper zu erkennen.

Eine andere Möglichkeit zum Ermitteln der spektralen oder radiometrischen Bilddaten stellt die sogenannte Computer Vision (maschinelles Sehen oder Bildverstehen) dar, mit der aus Bilddaten stereoskopisch 3D-Daten generiert werden. Dieses Verfahren erlaubt eine erhöhte geometrische, aber auch radiometrische Auflösung. Im Speziellen die daraus gewonnene hochredundante Radiometrie bestehend aus pixelsynchroner Information für Farbwerte, Textur, 3D-Tiefeninformation und Infrarot erlaubt eine verlässliche Binärklassifikation von Gebäuden in Bildern. Dabei reichen die Klassifikationsmethoden von komplexen Shape- oder Geometrie basierten Ansätzen (in zwei Dimensionen, aber mit dreidimensionaler Information) bis hin zu schnellen Pixelbasierten Clusteringverfahren in berechneten Merkmalsräumen.

Unabhängig von der verwendeten 3D-Modalität (LiDAR, oder 3D-Tiefeninformation berechnet aus digitalen Bildern) hat es sich gezeigt, dass eine Kombination aus 2D- und 3D-Daten unumgänglich ist, um hohe Erkennungsraten zu gewährleisten. Ob diese Daten nach dem Prinzip der sogenannten "Early Fusion" (Kombination der Daten auf der Bildebene) oder "Late Fusion" (Klassifikation der 2D- und 3D-Daten wird getrennt gelernt und evaluiert, die endgültige binäre Entscheidung liefert ein zusätzlicher Kombinationsschritt) verarbeitet werden, ist derzeit Teil von groß angelegten Evaluierungen basierend auf öffentlichen Daten, um die Leistungsfähigkeit der beiden Methoden vergleichen zu können, was z.B. von der Internationalen Gesellschaft für Photogrammetrie und Fernerkundung ISPRS unterstützt wird.

Im Rahmen der Computer Vision werden vermehrt aktuelle und von Internet-Usern zur Verfügung gestellte Internet-Daten verwendet. Die Internet-Daten können aus dem Internet heruntergeladene Bilddaten sein (die zu einer 3D-Szenen-Rekonstruktion dienen können) oder Kontextinformation, die als Attribute oder Anmerkungen (Textannotierungen) Verwendung finden. Die Initiative OpenStreetMap etwa stellt weltweite Geoinformationsdaten zur Verfügung, welche unter anderem Vektor-basierte Gebäudedaten enthalten (d.h. die zweidimensionale Geometrie der Gebäude ist teilweise bekannt). Die Daten werden z.B. zum Zusammensetzen flächendeckender 3D-Rekonstruktionen mittels Projektionen verwendet, aber nicht für die effiziente Generierung von Trainingsdaten und Verfeinerung (Refinement) der anfänglichen Geometrie.

Neuere Methoden der Computer Vision für den Erhalt von zusätzlicher Information setzen auf Internet-basierte Methoden wie LabelMe, wo Internet-User Bilder und/oder Anmerkungen zu Bildern einbringen können, oder Amazons kostenpflichtiges Mechanical Turk, wo unter anderem die Dienstleistung des Annotierens von Bildern nachgefragt und erbracht werden kann. Diese Methoden können aber nur Trainingsdaten im kleineren Umfang liefern, wie etwa für den wissenschaftlichen Bereich. Für eine kommerzielle Nutzung können nicht ausreichend Daten geliefert werden, außerdem müssen die Ausgangsdaten bei Verwendung dieser Methoden öffentlich zugänglich gemacht werden: denn im Gegensatz zur 3D-Rekonstruktion aus Bildern aus dem Internet (von Facebook®, Flickr®, Picassa, etc.) ist ein Upload der Ausgangsdaten notwendig, um Annotierungen zu erhalten. Im Falle von Luftbilddaten kann das Datenvolumen mehrere Gigabytes an Bildern umfassen. Die Druckschrift "FRAMEVVORK TO AUTOMATICALLY CHARACTERIZE REAL PROPERTY USING HIGH RESOLUTION AERIAL IMAGES", von Philipp Meixner, Franz Leberl, veröffentlicht im Rahmen der American Society for Photogrammetry and Remote Sensing Annual Conference 2010, oofenbart ein Verfahren, um Luftbildaufnahmen mit semantischen Informationen zu versehen, die aus Katasterkarten stammen. Generell soll die Datenmenge des Gebäudemodels gering gehalten werden, daher ist geometrische Vereinfachung (Abstraktion) nötig. Das Problem der geometrischen Abstraktion der Daten für das zwei- oder dreidimensionale Gebäudemodell wird häufig durch Verwendung von mehr oder weniger rechenaufwändigen Fitting- und Optimierungsansätzen ermöglicht, erfordert aber ein umfassendes Vorwissen von geometrischen Prototypen oder eine festgelegte Anzahl von sogenannten "Primitiven". Es kann auch eine geometrische Repräsentation aus der Kombination von Erscheinung und 3D-Information erfolgen, die Ableitung der endgültigen Geometrie hängt dennoch meist von einem Kompromiss zwischen Datenmenge und Einfachheit ab.

### Darstellung der Erfindung

Es ist eine Aufgabe der vorliegenden Erfindung, ein Verfahren zur Verfügung zu stellen, welches automatisch eine genaue dreidimensionale semantische Gebäudesegmentierung aus Luftbildaufnahmen ermöglicht. Dabei soll - zumindest in einem Zwischenschritt - eine pixelweise Klassifikation erfolgen (also jedes Pixel ist einem Segment und jedem Segment ist eine semantische Bedeutung zuzuordnen) als auch ein sogenanntes "wasserdichtes" (es dürfen keine nichtklassifizierten Pixel vorhanden sein, die ein "Loch" in der Gebäudehülle darstellen würden) und konsistentes, vorzugsweise dreidimensionales, Gebäudemodell mit semantischer Information erstellt werden.

Diese Aufgabe wird durch ein Verfahren mit den Merkmalen des Patentanspruchs 1 gelöst. Vorteilhafte Ausgestaltungen der Erfindung sind in den jeweiligen abhängigen Ansprüchen definiert.

Gemäß Anspruch 1 ist bei einem Verfahren zum automatischen Erstellen von zwei- oder dreidimensionalen Gebäudemodellen aus zumindest einer digitalen Luftaufnahme und zum automatischen Versehen mit semantischer Gebäudeinformation, vorgesehen,
- dass Tiefeninformation aus der Luftaufnahme bestimmt wird,
- dass der Luftaufnahme eine Georeferenzierung zugeordnet wird,
- dass Katasterdaten und/oder Geoinformationsdaten, welche semantische Information umfassen, für das auf der Luftaufnahme abgebildete Gebiet beschafft werden,
- dass Trainingsdaten auf Basis der Katasterdaten und/oder Geoinformationsdaten als zweidimensionales erstes Vektormodell umfassend semantische Information generiert und damit ein Klassifikator trainiert wird,
- dass die Luftaufnahme pixelweise segmentiert und die Segmente mittels des trainierten Klassifikators in zumindest zwei verschiedene Klassen klassifiziert werden, wobei eine Klasse Gebäude repräsentiert,
- dass aus der segmentierten und klassifizierten Luftaufnahme ein zweites, zwei- oder dreidimensionales Vektormodell generiert wird,
- dass in das zweite Vektormodell durch Vergleich mit dem ersten Vektormodell semantische Information von diesem übernommen wird
- dass im Falle eines gewünschten dreidimensionalen Gebäudemodells mit Hilfe der Tiefeninformation und der aus dem zweidimensionalen zweiten Vektormodell bekannten Grundfläche des Gebäudes ein dreidimensionales Vektormodell des Gebäudes mit semantischer Information erstellt wird.

Die Tiefeninformation kann entweder direkt beim Erstellen der Luftaufnahme erlangt werden, etwa mittels LiDAR Technologie oder einer anderen Methode, die über einen Sensor für dreidimensionale Luftaufnahmen verfügt. Die Tiefeninformation kann aber auch aus zwei oder mehreren zweidimensionalen Luftaufnahmen, etwa radiometrischen Farbfotos, bestimmt werden, etwa über Stereoskopie. Dabei werden mehrere Luftaufnahmen des gleichen Gebiets, aber von unterschiedlichen Blickwinkeln aus gemacht und aus den Unterschieden in den Luftaufnahmen über Stereoskopie die Tiefeninformation berechnet.

Die dreidimensionale Rekonstruktion bzw. Tiefendatengewinnung aus den Luftbildaufnahmen muss in jedem Fall erfolgen, auch wenn am Ende kein dreidimensionales Gebäudemodell, sondern nur ein aktualisierter zweidimensionaler Umriss des Gebäudes abgeleitet werden soll. Dies deshalb, weil die zweidimensionale Segmentierung neben der Farb- auch die absolute Höheninformation (RGB, z) nutzt. Nur so ist es beispielsweise möglich, Straßen von Flachdächern (als erhabene Objekte gegenüber der Grundebene) zu unterscheiden, denn in den radiometrischen Eigenschaften auf Pixelebene können sich diese gleichen.

Unter dem Vorgang der Georeferenzierung, Geokodierung oder Verortung versteht man die Zuweisung raumbezogener Informationen, der Georeferenz, zu einem Datensatz, also hier zur einer Luftaufnahme. Die Georeferenz enthält in der Regel die geografischen Koordinaten. Es ist eine grobe Georeferenzierung, also eine Genauigkeit im Bereich von 50 cm, ausreichend.

Die Generierung von Trainingsdaten wird durch die zumindest teilweise Verwendung von Katasterdaten und/oder Geoinformationsdaten erleichtert.

Das Kataster, kurz für Liegenschaftskataster, ist die flächendeckende Beschreibung sämtlicher Flurstücke (Parzellen) eines Landes. In einem beschreibenden Teil (Liegenschaftsbuch) und in Karten (Liegenschaftskarte) werden die geometrische Lage, die baulichen Anlagen/Liegenschaften, die Art der Nutzung und Größe beschrieben.

Geoinformationsdaten werden von öffentlichen Einrichtungen zur Verfügung gestellt, etwa vom Bundesministerium für Land- und Forstwirtschaft, Umwelt und Wasserwirtschaft in Österreich, oder von privaten Anbietern, wie OpenStreetMap. Ein Geoinformationssystem (GIS) verknüpft - gegebenenfalls digitale - geometrische Daten wie Karten, Pläne und Bilder mit Sachdaten wie Tabellen oder Datenbanken in einem System. Oft sind Katasterdaten oder Geoinformationsdaten jedoch nicht digital, zu ungenau oder veraltet.

Die zu beschaffenden Katasterdaten und/oder Geoinformationsdaten, z.B. von OpenStreetMap, müssen nicht genau sein, sie können in Details abweichen oder unvollständig sein. Sie enthalten aber bereits semantische Information, etwa in Form von Annotierungen.

In der Computer Vision (maschinelles Sehen oder Bildverstehen) wird unter Annotierung ganz allgemein der Schritt verstanden, Daten - meist manuell- mit einem Label zu versehen, vor allem, um diese Daten dann als Trainingsbeispiele für lernfähige Algorithmen zu nutzen. Sollen etwa Personen in Bilder erkannt werden, so müssen diese in vielen Bildern einzeln markiert werden, was ein zeitaufwändiger und arbeitsintensiver Schritt ist. Im Falle von OpenStreetMap wurde die zeitaufwändige Arbeit von vielen Personen ("Crowd Sourcing") kostenlos wahrgenommen, wobei natürlich die Qualität der Daten nicht perfekt sein wird, aber zumindest größtenteils und nahezu stimmen wird.

Genau in letztem Aspekt fußt die gegenständliche Erfindung. Die imperfekten Daten werden als Startpunkt für einen Lernalgorithmus verwendet, der mit leichten Fehlern in den Labels (sogenanntes Label Noise) umgehen kann. Daraus werden ortstreue exakte Daten ermittelt und anschließend das (semantische) Wissen, das durch die Community generiert wurde, auf diese korrigierten Daten übertragen.

Bevor die eigentliche Segmentierung und Klassifizierung der Luftaufnahme erfolgen kann, muss der sogenannte Klassifikator trainiert werden, der die Segmentierung und Klassifikation der Segmente der Luftaufnahme vornimmt.

Dazu wird aus den Katasterdaten und/oder Geoinformationsdaten (z.B. aus OpenStreetMap) ein zweidimensionales Vektormodell umfassend semantische Information generiert. Vektormodelle bauen auf Punkten und Linien auf. So wird etwa eine Gebäudekante als Linie dargestellt. Ein geschlossener Linienzug stellt dabei eine Fläche dar, z.B. ein Dach. Auf diese Weise ist es etwa möglich, eine Fläche bereits als "Gebäude" zu klassifizieren.

Damit kann nun der Klassifikator beim Trainieren (Lernen) ähnliche Flächen ebenfalls als z.B. "Gebäude" identifizieren. Robuste Trainingsalgorithmen können dabei auch initial falsche Zuordnungen ("Label Noise") herausfiltern.

Ist der Klassifikator trainiert, kann er auf die Daten der Luftaufnahme angewendet werden: Die Luftaufnahme wird dabei pixelweise segmentiert und klassifiziert. Dabei können schnelle Methoden angewendet werden, etwa unter Verwendung von GPU-basierten Entscheidungsbäumen, siehe Sharp, T. Implementing Decision Trees and Forests on a GPU, Proceedings ECCV, 2008, mit parallelisierter Merkmalsextraktion aufgrund von vorliegender visueller und geometrischer Information, siehe Kluckner, S., Mauthner, T., Roth, P. M., Bischof, H., Semantic Classification in Aerial Imagery by Integrating Apperance and Height Information, Proceedings Asian Conference on Computer Vision, 2009.

Auf diese Weise findet eine pixelweise Klassifikation der dreidimensionalen bzw. 2,5-dimensionalen Daten in verschiedene Archetypen, nämlich zumindest in die Klassen "Gebäude" und "Nicht-Gebäude", statt.

Nach der bildbasierten Klassifikation liegt eine Klassifikation auf Pixelebene im zweidimensionalen Bildbereich vor. Das gewünschte Ergebnis für zwei als auch für drei Dimensionen ist aber eine polygonale bzw. vektorielle Darstellung (eben ein "Modell"). Daher muss zunächst die pixelweise Klassifikation vektorisiert werden, was davor inhärent den Schritt der Segmentierung (Gruppierung von Bereichen mit hinreichender Homogenität in der Klassifizierung) fordert.

Nun liegen also zwei vektorielle Repräsentationen vor. Das aus der zweidimensionalen Klassifizierung abgeleitete zweite Vektormodell, das die IST-Daten enthält, und das ursprüngliche, aus den Kataster- bzw. Geoinformationssytem-(GIS) Daten erstellte erste Vektormodell. Die Vektordaten aus der Luftaufnahme entsprechen dem IST-Zustand in der Realität, die Daten im Kataster oder Geoinformationssystem können davon leicht abweichen, tragen aber zusätzliche semantische Information in sich. Diese gilt es auf das zweite Vektormodell sinngemäß und positionsgetreu zu übertragen. Dazu müssen Punktkorrespondenzen in den beiden vektoriellen Repräsentationen ermittelt werden.

Nach dem ersten Schritt - Trainieren des Klassifikators und Anwenden des Klassifikators auf die IST-Daten - kommt nun der zweite Schritt des Anpassens (Update) des vorliegenden zweidimensionalen Vektormodells (zweites Vektormodell), auch als "2D-Fitting" bezeichnet: Dies erfolgt durch Abgleich der vektoriellen Annotierung extrahiert aus den vorliegenden Daten des GIS bzw. Katasters mit den Luftbild-basierten Gebäudekanten.

Dies kann iterativ erfolgen, etwa mittels ICP (Iterative Closest Points): Der Iterative Closest Point Algorithmus ermöglicht es, Punktwolken aneinander anzupassen. Für die Punktwolken werden Koordinatentransformationen so bestimmt, dass die Abstände zwischen den Punktwolken minimiert werden. Dazu wird für jeden Punkt aus der einen Punktwolke der jeweils nächste Punkt (closest point) aus der anderen Punktwolke bestimmt. Die Summe der Quadrate der Abstände wird durch Anpassung der Transformationsparameter minimiert. Dieser Vorgang geschieht iterativ so lange, bis das Optimum gefunden ist.

Der Abgleich der Vektor-Annotierung mit den Luftbild-basierten Gebäudekanten kann jedoch auch direkt erfolgen, etwa über schnelle, implizit berechnete Transformationen generiert aus bekannten Punktkorrespondenzen.

Wichtig beim Anpassen des zweidimensionalen Vektormodells ist, dass der Formbegriff bzw. die assoziierte Semantik (also etwa "Dach") der polygonalen Vektorrepräsentation des ursprünglichen zweidimensionalen Vektormodells dabei übertragen wird bzw. erhalten bleibt.

In diesem Schritt der Übertragung kann es vorkommen, dass semantische Daten an Punkten des ersten Vektormodells stehen, die beim ermittelten Vektor bzw. Polygon (IST) des zweiten Vektorsystems nicht direkt ausgeprägt sind. Als Beispiel kann etwa ein Giebeldach auf einer rechteckigen Gebäudegrundfläche dienen. Dann können die vier Eckpunkte der Gebäudegrundfläche zwischen Messung (Luftaufnahme) aus dem zweiten Vektormodell und GIS/Katasterdaten aus dem ersten Vektormodell (Katastermodell) einander zugeordnet werden.

Die Giebellinie kann nun in der Annotierung in (x,y Lage) oder auch als Dachhöhe bzw. Neigung vermerkt werden. Diese Information ist dann proportional entsprechend auf das zweite Vektormodell zu übertragen, sodass die Position proportional zur Transformation zwischen den beiden Vektorrepräsentationen ermittelt wird. Liegt also die Giebellinie in der Annotierung aus dem ersten Vektormodell in der Mitte einer Gebäudeaußenkante, so wird auch im IST-Zustand gemäß zweitem Vektormodell wieder das Mittel angenommen.

Verallgemeinert heißt das, dass semantische Gebäudeinformation des ersten Vektormodells, welche in Relation zum ersten Vektormodell und nur in diesem dargestellt ist, im zweiten Vektormodell proportional zu diesem dargestellt wird. Dies ist dann relevant, wenn die IST-Daten von den GIS/Katasterdaten abweichen: ist das Dach in Realität gemäß Luftaufnahme breiter als im Kataster und ist im Kataster eine mittige Giebellinie vermerkt, so liegt die Giebellinie des Giebeldaches im zweiten Vektormodell ebenfalls in der Mitte des - breiteren - Dachs und damit geografisch an einer anderen Stelle als gemäß Kataster.

Nach dem zweiten Schritt des 2D-Fitting erfolgt nun der dritte Schritt des 3D-Fittings, falls ein dreidimensionales Vektormodell erstellt werden soll: die nunmehr bekannte, geometrisch repräsentierte Grundfläche der Gebäude wird mittels der vorhandenen Tiefeninformation, welche etwa aus dem Oberflächenmodell extrahiert wird, in die Höhe gezogen. Dies kann etwa in zwei Varianten erfolgen:
Bei der ersten Variante - bei der Erstellung des dreidimensionalen Vektormodells werden Dachflächenpunkte, die aus dem zweidimensionalen Vektormodell bekannt sind, mit der entsprechenden Höhe aus der Tiefeninformation versehen - wird das Vorwissen über Dachflächenpunkte genutzt. Wenn nämlich zusätzlich zum Gebäudegrundriss geometrische Dachflächenpunkte im zweidimensionalen Vektormodell vorab bekannt und annotiert (das heißt, mit semantischer Information versehen, etwa "Dachfirst", oder Dachfläche 1, 2, etc.) sind, können die Dachflächenpunkte anhand der vorliegenden Information gefittet, also mit einem Tiefenwert versehen werden. Hierbei können vor allem große Flächen robust erkannt, semantisch interpretiert und speicherschonend abgelegt werden.

Bei der zweiten Variante wird für das dreidimensionale Vektormodell die Höhe des Gebäudes iterativ unter Verwendung von gelernten Gebäudemodellen und mit den Grundflächenpunkten als Ausgangsbasis bestimmt. Dies ist ein modellbasierter oder parametrischer Ansatz, der mit den Grundflächenpunkten des Gebäudes initialisiert wird. Denkbare Verfahren sind hier z.B. sogenannte "Active Shape Models" (ASM). ASM repräsentieren ein Modell als eine Menge von miteinander verbundenen Punkten. Diese Punkte beschreiben zum Beispiel den Umriss eines bestimmten Objekts. Aus Trainingsbildern wird ein Durchschnitt der Objektumrisse bzw. Shapes generiert. Auch lässt sich aus den Trainingsbildern ableiten, in welcher Weise sich die Shapes verändern dürfen.

Es werden Prototypen oder "Moden" gelernt, die sich dann durch Linearkombinationen kombinieren lassen, um so einen möglichst großen Bereich an möglichen Gebäudeformen abzudecken. Ziel ist hier, dass das Modell initialisiert wird und dann iterativ diese notwendigen Parameter bis zu einer Konvergenz automatisch bestimmt werden. Dies stellt zudem eine sehr kompakte Repräsentation des Modells dar, da nur die jeweiligen Parameter der Objekte gespeichert werden müssen.

Bei den modellbasierten oder parametrischen Verfahren wird versucht, aus Modellen, die aus vielen Gebäuden trainiert worden sind, die real existierenden Gebäudeformen zusammenzusetzen. Die Modelle sind Prototypen mit einer endlichen Anzahl von Gestaltparametern. Die Parameterwerte werden dabei iterativ bestimmt, bis Konvergenz gegeben ist. Diese Verfahren erlauben ein 3D-Fitting, wenn nur die Grundfläche des Gebäudes in zwei Dimensionen bekannt ist und Tiefenwerte ohne weitere Annotierungen vorliegen.

Bei beiden Varianten ist das Ergebnis ein vollständiges, parametrisches 3D-Gebäudemodell, das mit zusätzlicher semantischer Information versehen ist.

Das erfindungsgemäße Gebäudemodell mit semantischer Information kann dann effizient in Standard-Datenformaten wie CityGML oder IFC (Industry Foundation Classes) dargestellt werden.

Es kommt ohne zeit- und kostenaufwändige händische Erstellung von Trainingsbeispielen aus, die speziell für jeden Datensatz, also für jede Luftaufnahme, durch Unterschiede in regionaler Erscheinung, Bauweise und spektraler Eigenheit von Gebäuden notwendig ist. Stattdessen nützt die gegenständliche Erfindung durch automatisches Herbeischaffen bereits vorliegende, aktuelle und stetig wachsende zweidimensionale Daten bzw. Annotierungen.

Mit der vorliegenden Erfindung können automatisch wasserdichte 3D-Gebäudemodelle mit semantischer Information aus Luftbildaufnahmen generiert werden, ebenso als Zwischen- oder Nebenprodukt ortskorrigierte Katasterdaten mit pixelweiser Klassifizierung. Damit können dann automatisch "Updates" bei kleineren baulichen Veränderungen durchgeführt werden.

Kurz zusammengefasst bezieht sich die erfindungsgemäße Verfahrenskette auf einen meist iterativen Ansatz, der geometrische (vektor-basierte) Annotierungen als Trainingsgrundlage verwendet und damit eine Klassifikation auf Bildpunktebene und Transformationsparameter zur Konvergenz ("2D-Fitting") ansteuert. Als Folgeschritt wird die geometrische, registrierte 2D-Gebäudeform für die 3D-Extrusion der Daten verwendet ("3D-Fitting").

Da die vorliegende Erfindung ja automationsunterstützt umgesetzt wird, beinhaltet diese auch ein Computerprogrammprodukt, welches ein Programm umfasst, das direkt in einen Speicher einer Datenverarbeitungsanlage ladbar ist, mit Programm-Mitteln, um alle Schritte des Verfahrens nach einem der vorhergehenden Ansprüche auszuführen, wenn das Programm ausgeführt wird.

## Patentansprüche

1. Verfahren zum automatischen Erstellen von zwei- oder dreidimensionalen Gebäudemodellen aus zumindest einer digitalen Luftaufnahme und zum automatischen Versehen mit semantischer Gebäudeinformation, so ausgeführt
- dass Tiefeninformation aus der Luftaufnahme bestimmt wird,
- dass der Luftaufnahme eine Georeferenzierung zugeordnet wird,
- dass Katasterdaten und/oder Geoinformationsdaten, welche semantische Information umfassen, für das auf der Luftaufnahme abgebildete Gebiet beschafft werden,
- dass Trainingsdaten auf Basis der Katasterdaten und/oder Geoinformationsdaten als zweidimensionales erstes Vektormodell umfassend semantische Information generiert und damit ein Klassifikator trainiert wird,
- dass die Luftaufnahme pixelweise segmentiert und die Segmente mittels des trainierten Klassifikators in zumindest zwei verschiedene Klassen klassifiziert werden, wobei eine Klasse Gebäude repräsentiert,
- dass aus der segmentierten und klassifizierten Luftaufnahme ein zweites, zwei- oder dreidimensionales Vektormodell generiert wird,
- dass in das zweite Vektormodell durch Vergleich mit dem ersten Vektormodell semantische Information von diesem übernommen wird,
- dass im Falle eines gewünschten dreidimensionalen Gebäudemodells mit Hilfe der Tiefeninformation und der aus dem zweidimensionalen zweiten Vektormodell bekannten Grundfläche des Gebäudes ein dreidimensionales Vektormodell des Gebäudes mit semantischer Information erstellt wird.

2. Verfahren nach Anspruch 1, so dass die Katasterdaten und/oder Geoinformationsdaten automationsunterstützt über öffentlich zugängliche Datenquellen beschafft werden.

3. Verfahren nach Anspruch 1 oder 2, so dass der Vergleich zwischen erstem und zweitem Vektormodell mittels iterativer Verfahren, wie mittels des Iterative Closest Point Algorithmus, erfolgt.

4. Verfahren nach nach Anspruch 1 oder 2, so dass der Vergleich zwischen erstem und zweitemVektormodell mittels direkter Verfahren, insbesondere unter Verwendung bekannter Punktkorrespondenzen, erfolgt.

5. Verfahren nach einem der Ansprüche 1 bis 4, so dass semantische Gebäudeinformation des ersten Vektormodells, welche in Relation zum ersten Vektormodell und nur in diesem dargestellt ist, im zweiten Vektormodell proportional zu diesem dargestellt wird.

6. Verfahren nach einem der Ansprüche 1 bis 5, so dass bei der Erstellung des dreidimensionalen Vektormodells Dachflächenpunkte, die aus dem zweidimensionalen Vektormodell bekannt sind, mit der entsprechenden Höhe aus der Tiefeninformation versehen werden.

7. Verfahren nach einem der Ansprüche 1 bis 5, so dass für das dreidimensionale Vektormodell die Höhe des Gebäudes iterativ unter Verwendung von gelernten Gebäudemodellen und mit den Grundflächenpunkten als Ausgangsbasis bestimmt wird.

8. Computerprogrammprodukt, welches ein Programm umfasst, das direkt in einen Speicher einer Datenverarbeitungsanlage ladbar ist, mit Programm-Mitteln, um alle Schritte des Verfahrens nach einem der vorhergehenden Ansprüche auszuführen, wenn das Programm ausgeführt wird.

## Claims

1. Method for the automatic creation of two- or three-dimensional building models from at least one digital aerial photograph and for the automatic provision of semantic building information, embodied such that
- depth information is determined from the aerial photograph,
- the aerial photograph is assigned a georeference,
- the land registry data and/or geoinformation data, which comprises semantic information, is obtained for the area represented on the aerial photograph,
- training data based on the land registry data and/or geoinformation data is generated as a two-dimensional first vector model comprising semantic information and a classifier is thus trained,
- the aerial photograph is segmented pixel by pixel and the segments are classified into at least two different classes by means of the trained classifier, wherein one class represents buildings,
- a second two- or three-dimensional vector model is generated from the segmented and classified aerial photograph,
- semantic information from the first vector model is carried over into the second vector model by comparison herewith,
- in the case of a desired three-dimensional building model, a three-dimensional vector model of the building with semantic information is created with the aid of the depth information and the footprint of the building known from the two-dimensional second vector model.

2. Method according to claim 1, so that the land registry data and/or geoinformation data is obtained in an automated manner by way of publicly accessible data sources.

3. Method according to claim 1 or 2, so that the comparison between the first and second vector model is carried out using iterative methods, such as by means of the Iterative Closest Point algorithm.

4. Method according to claim 1 or 2, so that the comparison between the first and second vector model is carried out by means of direct methods, in particular using known point correspondences.

5. Method according to one of claims 1 to 4, so that semantic building information from the first vector model, which is shown in relation to the first vector model and only shown in the first vector model, is shown proportional to the first vector model in the second vector model.

6. Method according to one of claims 1 to 5, so that in the creation of the three-dimensional vector model, roof area points, which are known from the two-dimensional vector model, are provided with the corresponding height from the depth information.

7. Method according to one of claims 1 to 5, so that for the three-dimensional vector model, the height of the building is iteratively determined using learnt building models and using the footprint points as the basis.

8. Computer program product, which comprises a program, which can be loaded directly into a memory of a data processing system, having program means, in order to execute all steps of the method according to one of the preceding claims, if the program is executed.

## Revendications

1. Procédé pour la réalisation automatique de modèles de bâtiment en deux ou trois dimensions au départ d'au moins un cliché aérien numérique et pour la dotation automatique en une information sémantique sur les bâtiments, exécuté de telle manière
- qu'une information de profondeur est déterminée au départ du cliché aérien,
- qu'un géoréférencement est affecté au cliché aérien,
- que des données cadastrales et/ou des données relatives aux informations géographiques, lesquelles englobent une information sémantique, sont procurées pour la zone dépeinte sur le cliché aérien,
- que des données d'apprentissage sont générées sous la forme d'un premier modèle vectoriel en deux dimensions englobant l'information sémantique sur la base des données cadastrales et/ou des données relatives aux informations géographiques et un classificateur est ainsi appris,
- que le cliché aérien est segmenté pixel par pixel et les segments sont classifiés en au moins deux classes différentes au moyen du classificateur appris, une classe représentant les bâtiments,
- qu'un deuxième modèle vectoriel en deux ou trois dimensions est généré au départ du cliché aérien segmenté et classifié,
- qu'une information sémantique du premier modèle vectoriel est reprise dans le deuxième modèle vectoriel en les comparant,
- qu'en cas de souhait d'un modèle de bâtiment en trois dimensions, un modèle vectoriel en trois dimensions du bâtiment avec information sémantique est élaboré à l'aide de l'information de profondeur et de la surface de base du bâtiment connue au départ du deuxième modèle vectoriel en deux dimensions.

2. Procédé selon la revendication 1, dans lequel les données cadastrales et/ou les données relatives aux informations géographiques sont procurées de manière assistée par automation via des sources de données accessibles publiquement.

3. Procédé selon la revendication 1 ou 2, dans lequel la comparaison entre le premier et le deuxième modèle vectoriel s'opère au moyen d'un procédé itératif comme au moyen de l'algorithme de point le plus proche itératif.

4. Procédé selon la revendication 1 ou 2, dans lequel la comparaison entre le premier et le deuxième modèle vectoriel s'opère au moyen d'un procédé direct, en particulier en utilisant les correspondances de points connues.

5. Procédé selon l'une des revendications 1 à 4, dans lequel l'information sémantique sur les bâtiments du premier modèle vectoriel, représentée en relation avec le premier modèle vectoriel et uniquement dans celui-ci, est représentée proportionnellement à celui-ci dans le deuxième modèle vectoriel.

6. Procédé selon l'une des revendications 1 à 5, dans lequel lors de l'élaboration du modèle vectoriel en trois dimensions, des points de surface de toiture, connus au départ du modèle vectoriel en deux dimensions, sont dotés de la hauteur correspondante issue de l'information de profondeur.

7. Procédé selon l'une des revendications 1 à 5, dans lequel pour le modèle vectoriel en trois dimensions, la hauteur du bâtiment est déterminée par itération en utilisant des modèles de bâtiment appris et avec les points de la surface de base comme base de départ.

8. Produit de programme informatique, lequel comprend un programme directement chargeable dans une mémoire d'un équipement informatique, avec des dispositifs de programme afin d'exécuter toutes les étapes du procédé selon l'une des revendications précédentes lorsque le programme est exécuté.
